# EUROPÄISCHE PATENTSCHRIFT

(11) **EP 2 579 958 B1**
(45) Veröffentlichungstag und Bekanntmachung des Hinweises auf die Patenterteilung: **06.03.2019**
(21) Anmeldenummer: 11724599.3
(22) Anmeldetag: 30.05.2011
(51) Int. Cl.: B01D 17/04, B01D 17/00, B01D 36/00, B01D 29/21, B01D 29/92, F02M 37/22

(54) **FILTEREINRICHTUNG, INSBESONDERE FLÜSSIGKEITSFILTER**
FILTER DEVICE, IN PARTICULAR LIQUID FILTER
DISPOSITIF DE FILTRATION, EN PARTICULIER FILTRE POUR LIQUIDES

(30) Priorität: 14.06.2010 DE 102010023650
(43) Veröffentlichungstag der Anmeldung: 17.04.2013
(73) Patentinhaber: Mann + Hummel GmbH, 71636 Ludwigsburg (DE)
(72) Erfinder: VOLKMER, Daniel, 71282 Hemmingen (DE); TRAUTMANN, Pius, 70499 Stuttgart (DE); DÜRR, Elke, 71679 Asperg (DE); JOKSCHAS, Günter, 71540 Murrhardt (DE); NISSLER, Elisabeth, 71384 Weinstadt (DE); SCHWEIKART, Marco, 71672 Marbach (DE); SCHRECKENBERGER, Dieter, 71729 Erdmannhausen (DE); EPLI, Sven, 74078 Heilbronn (DE); GLÜCK, Oliver, 70499 Stuttgart (DE); EICHINGER, Stefan, 70839 Gerlingen (DE)
(74) Vertreter: Börger, Saskia Lena
(86) Internationale Anmeldenummer: PCT/EP2011/058785
(87) Internationale Veröffentlichungsnummer: WO 2011/157535

(56) Entgegenhaltungen:
- EP-A2- 0 405 447
- CA-A1- 963 400
- DE-A1-102008 038 160
- US-A1- 2008 135 469
- US-A1- 2008 245 719
- US-B1- 6 554 139

## Beschreibung

### Technisches Gebiet

Die Erfindung bezieht sich auf eine Filtereinrichtung, insbesondere einen Flüssigkeitsfilter, nach dem Oberbegriff des Anspruches 1.

### Stand der Technik

Aus der DE 101 23 190 A1 ist ein Kraftstofffilter mit Wasser abscheidenden Mitteln bekannt. Der Filter ist zweistufig mit zwei ineinander gesetzten, zylindrischen Filterelementen ausgeführt, welche radial von dem Kraftstoff durchströmt werden, wobei das stromauf gelegene Filterelement aus hydrophilem Material und das stromab liegende Filterelement aus hydrophobem Material besteht. Nach dem Durchströmen des ersten, hydrophilen Filters gelangt der gereinigte Kraftstoff einschließlich der Wasseranteile an die äußere Mantelfläche des zweiten, hydrophoben Filters, an welchem das Wasser abgeschieden und axial nach unten abgeleitet wird.

Aus der WO 2008/077954 A2 ist ein Kraftstofffilter bekannt, der ein ringförmiges, radial von außen nach innen zu durchströmendes Filterelement sowie ein ebenfalls ringförmiges, im Filterelement aufgenommenes Siebgewebeelement umfasst. Der Kraftstoff wird zunächst zur Partikelfilterung radial durch das Filterelement geleitet und muss vor der Anströmung des Siebgewebeelements zunächst an der Unterkante eines Gehäuseeinsatzes vorbeiströmen, welcher zur Umlenkung des Kraftstoffes dient. Im Bereich der unteren Stirnkante des Gehäuseeinsatzes erfolgt eine erste Wasserabscheidung, gefolgt von einer weiteren Wasserabscheidung an dem Siebgewebeelement.

Kraftstofffilter sind aus EP 0405447 A2, US 2008/135469 A1, US 6554139 B1, US 2008/0245719 A und DE 102008038160 A1 bekannt.

Der Erfindung liegt die Aufgabe zu Grunde, eine Filtereinrichtung mit verbessertem Wirkungsgrad zur Abscheidung von Partikeln bzw. mitgeführtem Medium anzugeben.

### Offenbarung der Erfindung

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung bezieht sich vorzugsweise auf Flüssigkeitsfilter, insbesondere Kraftstofffilter wie Filtereinrichtungen für Dieselkraftstoff oder Ottokraftstoff oder ggf. auch Ölfilter in Brennkraftmaschinen. Bei derartigen Flüssigkeitsfiltern wird beispielsweise Wasser, das im Kraftstoff bzw. Öl enthalten ist, ausgefiltert und aus der Filtereinrichtung abgeleitet. Grundsätzlich kommt aber auch eine Anwendung auf Filtereinrichtungen zur Filtration gasförmiger Fluide in Betracht, beispielsweise Luftfilter für Brennkraftmaschinen, aus denen ebenfalls vorzugsweise eine mitgeführte Flüssigkeit, in der Regel Wasser, mittels der Filtereinrichtung abgeschieden wird.

Die erfindungsgemäße Filtereinrichtung weist in einem zylindrischen Gehäuse ein ringförmiges Filterelement auf, mit einem an der radialen Innenseite angeordneten Stützgerüst, wobei das Filterelement von einem zu reinigenden Fluid radial von außen nach innen durchströmt wird, und wobei zwischen dem Filterelement und dem Stützgerüst ein Coaleszenzmedium angeordnet ist, wobei stromab des Filterelements eine Abströmöffnung zur Ableitung des gereinigten Mediums angeordnet ist, welche sich in dem vom Filterelement umschlossenen Innenraum befindet. Zwischen dem Filterelement und der Abströmöffnung, innerhalb des Stützgerüsts, befindet sich ein vorzugsweise strömungsdichtes Umlenkteil, welches separat von dem Stützgerüst ausgebildet ist und an dem ein Überströmbereich für die Strömung des gereinigten Mediums von dem Filterelement zur Abströmöffnung gebildet ist, wobei zwischen dem Umlenkteil und der Abströmöffnung ein Abscheidebauteil für abzuscheidende Partikel bzw. Tröpfchen, die nach dem Durchströmen des Filterelementes noch in der Fluidströmung enthalten sind, angeordnet ist. Das Umlenkteil ist als ringförmige Blockadewand ausgeführt, wobei die in Strömungsrichtung in Richtung einer Austragsöffnung für die Ableitung gesammelten Wassers betrachtet, obere Stirnkante der Blockadewand bei Anströmung bzw. Durchströmung des Filterelements über seine axiale Höhe einen Überströmbereich (5) für die Strömung des Mediums von dem Filterelement (3) zur Abströmöffnung (6) bildet, wobei sich die obere Stirnkante des Umlenkteils in der oberen Hälfte des Filterelements befindet, bezogen auf die gesamte axiale Höhe des Filterelements. Die Oberkante der Abströmöffnung liegt, bezogen auf das Umlenkteil, auf gleicher Höhe oder unterhalb des Überströmbereichs am Umlenkteil. Die Strömungsrichtung des gereinigten Fluids zwischen der Reinseite des Filterelements und der Abströmöffnung ist, bezogen auf die reguläre Einbaulage, in der das Filterelement über seine axiale Höhe stromab Richtung Austragsöffnung angeströmt bzw. durchströmt wird, in Richtung des Gewichtskraftvektors gerichtet.

Mit dieser Ausführung ist gewährleistet, dass die Strömung des vorgereinigten Mediums zwischen der Reinseite des Filterelements und der Abströmöffnung bezogen auf die reguläre Einbaulage, in der das Filterelement über seine axiale Höhe angeströmt bzw. durchströmt wird, mit einer nach unten gerichteten Komponente erfolgt, also mit einer Komponente in Richtung des Gewichtskraftvektors. Dies hat den Vorteil, dass die Strömung nicht mehr der Gewichtskraft der abzuscheidenden Tröpfchen entgegengerichtet, sondern gleichgerichtet ist, wodurch der Abscheidegrad erhöht wird. Soll beispielsweise mitgeführtes Wasser aus dem Kraftstoff oder Öl abgeschieden werden, so entstehen auf Grund der erfindungsgemäßen Relativposition von Überströmbereich am Umlenkteil und Abströmöffnung zueinander stromab des Überströmbereichs nach unten gerichtete Strömungskomponenten, welche zu der Abströmöffnung führen, so dass die Sedimentationsrichtung der Wassertropfen und die Hauptströmungsrichtung jeweils zumindest in Schwerkraftrichtung ausgerichtet sind. Die Wassertropfen lagern sich noch vor dem Austritt über die Abströmöffnung in einem Abscheideraum in Gehäuse der Filtereinrichtung ab und können aus diesem ausgetragen werden.

Bei Ausführungen aus dem Stand der Technik, bei denen die die Wasserpartikel enthaltende Strömung nach oben in Richtung der Abströmöffnung geführt ist, ist dagegen eine Abtrennung der Wassertropfen nicht möglich, wenn die Sedimentationsgeschwindigkeit kleiner als die Strömungsgeschwindigkeit ist; in diesem Fall werden die Wassertropfen in der aufwärtsgerichteten Strömung mittransportiert. Bei der erfindungsgemäßen Ausführung spielt dagegen das Verhältnis der Sedimentationsgeschwindigkeit zur Strömungsgeschwindigkeit für die Abscheidung keine entscheidende Rolle, wodurch der Abscheidegrad erheblich verbessert ist.

Erreicht für die nach unten gerichtete Strömung durch das Umlenkteil bzw. den Überströmbereich am Umlenkteil, was den Vorteil aufweist, dass am Filterelement selbst keine Modifikationen erforderlich sind. Es können somit Filterelemente ohne Änderungen oder Anpassungen verwendet werden.

Der Überströmbereich am Umlenkteil ist entweder in Form einer Ausnehmung in dem Umlenkteil, oder, gemäß bevorzugter Ausführung, unmittelbar an der Stirnseite bzw. Stirnkante des Umlenkteils ausgebildet. Erfindungsgemäß ist das Umlenkteil als eine ringförmige Blockadewand ausgeführt, deren obere Stirnkante den Überströmbereich bildet bzw. diesen begrenzt. Die Blockadewand liegt im Strömungsbereich zwischen der Reinseite des Filterelements und der Abströmöffnung und zwingt die Strömung, welche das Filterelement passiert hat, zu einer Umlenkung, um die gewünschte Strömung vom Umlenkteil mit der nach unten gerichteten Komponente hin zur Abströmöffnung zu erreichen. Dies hat außerdem den weiteren Vorteil, dass das Filterelement über seine gesamte axiale Höhe von dem zu reinigenden Fluid angeströmt werden kann, da erst im Bereich der Reinseite die Strömungsumlenkung an dem Umlenkteil erfolgt.

Das Umlenkteil ist erfindungsgemäß auf Abstand zur Reinseite angeordnet, wobei diese Ausführung den Vorteil aufweist, dass die radiale Durchströmung durch das Filterelement ohne Beeinträchtigung bleibt, so dass über die gesamte axiale Höhe und über die gesamte radiale Dicke des Filterelementes ein gleich bleibender, sich in Radialrichtung von außen nach innen erstreckender Strömungsvektor gegeben ist. Erst nach dem Austritt über die Reinseite des Filterelementes erfolgt die Umlenkung entlang der Wandseite des Umlenkteils, welche der Reinseite des Filterelementes zugewandt ist. Mit dem Erreichen des Überströmbereichs an der Stirnkante des Umlenkteils wird auf Grund der Druckverhältnisse eine Strömungsrichtung mit einer Komponente in Richtung des Gewichtskraftvektors eingestellt.

Die erfindungsgemäße Filtereinrichtung bezieht sich auf ringförmige Filterelemente, welche radial von außen nach innen durchströmt werden. Grundsätzlich möglich ist aber auch eine nicht erfindungsgemäße Ausführung eines Filterelementes beispielsweise als ebene Filterplatte. In der erfindungsgemäßen ringförmigen Ausführung des Filterelementes ist auch das Umlenkteil ringförmig ausgebildet, wohingegen bei einem nicht erfindungsgemäßen ebenen bzw. plattenförmigen Filterelement auch das Umlenkteil als ebene Blockadewand ausgeführt ist, welche entweder unmittelbar an der Reinseite des Filterelementes oder auf Abstand zu dieser liegt.

Das Filterelement ist an dem Stützgerüst, gehalten, welches sich insbesondere an der Reinseite des Filterelementes befindet. In der erfindungsgemäßen ringförmigen Ausführung des Filterelementes bildet das Stützgerüst einen Zylinder an der Innenseite des Filterelementes.

Das Umlenkteil ist separat von dem Stützgerüst ausgeführt. In der separaten Ausführung ist das Umlenkteil zweckmäßigerweise auf Abstand zur Reinseite des Filterelementes angeordnet.

Erfindungsgemäß ist vorgesehen, dass zwischen dem Umlenkteil und der Abströmöffnung ein Abscheidebauteil für die abzuscheidenden Partikel bzw. Tröpfchen ausgebildet ist. Das Abscheidebauteil dient zur Abscheidung der Partikel bzw. Tröpfchen, die nach dem Durchströmen des Filterelementes noch in der Fluidströmung enthalten sind. Das Abscheidebauteil ist beispielsweise als Sieb ausgeführt, insbesondere aus einem hydrophobem Material oder mit einer hydrophoben Beschichtung, so dass das zu reinigende Medium durch die Öffnungen im Sieb hindurchtreten kann und die abzuscheidenden Partikel bzw. Tröpfchen an der Siebwandung hängenbleiben und in den Sammelraum abströmen. Stromab des Siebs befindet sich die Abströmöffnung, über die das gereinigte und von den abzuscheidenden Partikeln bzw. Tröpfchen befreite Fluid abströmt.

Erfindungsgemäß ist zwischen dem Filterelement und dem Stützgerüst ein Coaleszenzmedium angeordnet, welches die im Kraftstoff enthaltenen Wassertröpfchen zu größeren Tropfen zusammenführt.

Der Sammelraum für die abzuscheidenden Partikel bzw. Tröpfchen befindet sich unterhalb der Abströmöffnung und ist mit einer Austragsöffnung zum Ableiten der abgeschiedenen Partikel bzw. Tröpfchen versehen.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine Ansicht eines Flüssigkeitsfilters im Schnitt,
Fig. 2 eine schematische Darstellung eines nicht erfindungsgemäßen Flüssigkeitsfilters, ebenfalls im Schnitt.

In den Figuren sind gleiche Bauteile mit gleichen Bezugszeichen versehen.

### Ausführungsformen der Erfindung

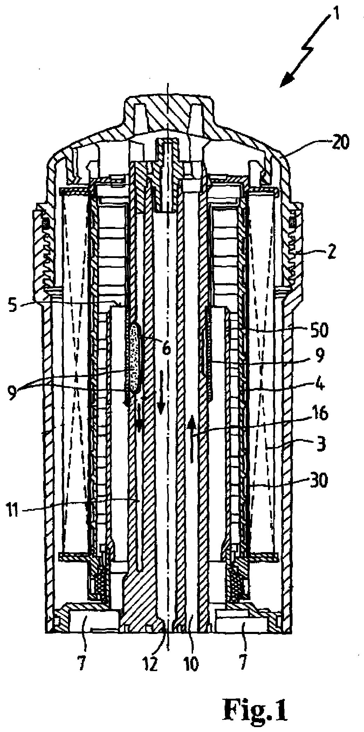

In Fig. 1 ist ein Flüssigkeitsfilter für eine Brennkraftmaschine dargestellt, insbesondere ein Kraftstofffilter. Die zu filternde Flüssigkeit tritt durch einen Einlasskanal 10 von unten in den Flüssigkeitsfilter 1 ein und strömt in Pfeilrichtung 16 durch den Einlasskanal 10, der in einem Kanalbauteil im Zentrum des Flüssigkeitsfilters angeordnet ist nach oben.

Der Flüssigkeitsfilter 1 weist weiter in dem zylindrischen Gehäuse 2 ein ringförmiges Filterelement 3 auf, das von der Flüssigkeit radial von außen nach innen von dem zu reinigenden Medium durchströmt wird. Das Material des Filterelementes 3 ist von einem an der radialen Innenseite angeordneten Stützgerüst 4 getragen und gehalten, welches vorzugsweise aus Kunststoff besteht. Die radiale Innenseite des Filterelementes 3 bildet die Reinseite, die radiale Außenseite die Rohseite. Erfindungsgemäß ist zwischen dem Filterelement 3 und dem Stützgerüst 4 ein Coaleszenzmedium 30 angeordnet, welches die im Kraftstoff enthaltenen Wassertröpfchen zu größeren Tropfen zusammenführt. In das Stützgerüst 4 sind Ausnehmungen eingebracht, über die die das Filterelement 3 passierende Strömung in den Innenraum des Stützgerüsts 4 eintreten kann.

In dem von dem ringförmigen Filterelement 3 umschlossenen Innenraum befindet sich eine Abströmöffnung 6, über die das über die Reinseite des Filterelementes ausgetretene Fluid aus dem Flüssigkeitsfilter 1 in den Auslasskanal 11 abgeleitet wird. Um eine Strömungsrichtung des gereinigten Fluids von oben nach unten in Richtung des Gewichtskraftvektors sicherzustellen, ist innerhalb des Stützgerüsts 4 ein Umlenkteil 50 in Form einer ringförmigen Blockadewand angeordnet. Das Umlenkteil 50 erstreckt sich für diesen Fall mindestens bis zur Oberkante der Abströmöffnung 6, vorzugsweise jedoch darüber hinaus, um die nach unten in Richtung des Bodens weisende Strömung des Fluids zu gewährleisten. Die obere Stirnkante des Umlenkteils 50 befindet sich in der oberen Hälfte des Filterelementes, bezogen auf die gesamte axiale Höhe des Filterelementes. Die obere Stirnkante des Umlenkteils 50 bildet hierbei einen Überströmbereich 5, über den die aus dem Filterelement austretende Strömung nach unten in Richtung der Abströmöffnung 6 geführt wird.

Die mitgeführten Wassertröpfchen im Kraftstoff, welche das Filterelement 3 passiert haben, werden noch vor der Ausleitung über die Abströmöffnung 6 innerhalb des Umlenkteils 50 abgeschieden und können in den unteren Bereich der Filtereinrichtung abströmen, in welchem ein Sammelbereich mit einer Austragöffnung 7 für die Ableitung des gesammelten Wassers gebildet ist. Vorzugsweise ist für eine verbesserte Wasserabscheidung vor der Abströmöffnung 6 ein Abscheidesieb 9 angeordnet, welches bevorzugt hydrophob ausgeführt ist und die Wassertröpfchen am Eintreten in die Abströmöffnung hindert. Dies wird insbesondere dadurch erleichtert, dass die Wassertröpfchen nicht senkrecht auf das Abscheidesieb 9 treffen sondern aufgrund der Strömungsumlenkung in einem spitzen Winkel, wodurch die Wassertröpfchen nicht durch eine frontale Anströmung durch das Abscheidesieb 9 gepresst werden.

Die Abströmöffnung 6 liegt auf radialem Abstand zur Reinseite des Filterelementes 3 bzw. zur Innenseite des Stützgerüstes 4 und des Umlenkteils 50. Zwischen Abströmöffnung 6 und Umlenkteil 50 kann das abgeschiedene Wasser nach unten zur Austragsöffnung 7 absinken. Dieser Zwischenraum ist durch eine Ablaufbohrung mit dem Tankrücklauf- und Entlüftungskanal 12 im Zentrum des Flüssigkeitsfilters verbunden.

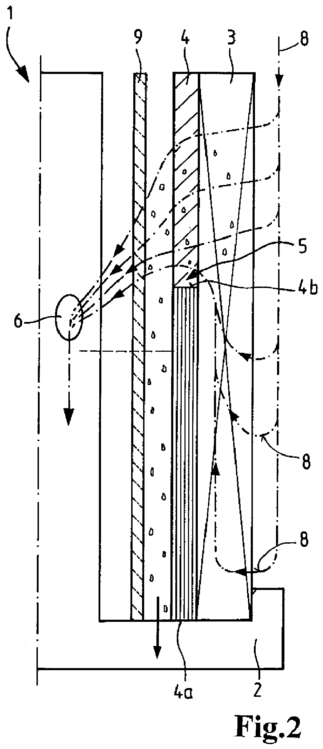

Auch in Fig. 2 ist eine Filtereinrichtung 1 mit einem Filterelement 3 in einem Filtergehäuse 2 dargestellt. Das Filterelement 3 ist ringförmig ausgebildet,. An der Strömungsinnenseite ist das Filterelement 3 von einem Stützgerüst 4 gehalten, dessen unterer Teil 4a geschlossen ausgeführt ist und ein Umlenkteil in Form einer Blockadewand bildet. Das das Filterelement 3 radial von außen nach innen durchströmende Medium kann, wie mit den Strömungspfeilen 8 dargestellt, an der dem Filterelement 3 zugewandten Wandseite des Umlenkteils 4a axial bis zum Überströmbereich 5 entlang strömen, der sich an der oberen Stirnkante des Umlenkteils befindet. Erst axial oberhalb der oberen Stirnkante ist ein Austritt der Strömung über die Reinseite des Filterelementes möglich. Die Stirnkante mit dem Überströmbereich 5 liegt axial mindestens auf gleicher Höhe, vorzugsweise aber geringfügig höher als die Abströmöffnung 6, welche sich stromab des Filterelementes befindet.

Zur Verbesserung der Abscheidung der mitgeführten Wasserpartikel dient ein Abscheidesieb 9, das stromab des Stützgerüsts 4 einschließlich des Umlenkteils 4a und der Abströmöffnung 6 angeordnet ist, wobei das Abscheidesieb 9 sowohl zum Umlenkteil als auch zur Abströmöffnung jeweils auf Abstand angeordnet ist. Das Abscheidesieb 9 ist hydrophob ausgeführt, wodurch die Abscheidewirkung verbessert wird und die in der Strömung 8 mitgeführten Wasserpartikel an der Abströmseite des Abscheidesiebs 9 abgeschieden werden, woraufhin die abgeschiedenen Wassertröpfchen nach unten in den Sammelraum abströmen können und von dort aus über die Austragöffnungen aus der Filtereinrichtung abgeleitet werden.

## Patentansprüche

1. Filtereinrichtung, insbesondere Flüssigkeitsfilter, mit einem in einem zylindrischen Gehäuse (2) aufgenommenen ringförmigen Filterelement (3) mit einem an der radialen Innenseite angeordneten Stützgerüst (4), wobei das Filterelement (3) an dem Stützgerüst (4) gehalten ist, wobei das Filterelement (3) von einem zu reinigenden Fluid radial von außen nach innen durchströmt wird und wobei zwischen dem Filterelement (3) und dem Stützgerüst (4) ein Coaleszenzmedium (30) angeordnet ist, und mit einer stromab des Filterelements (3) in dem vom Filterelement (3) umschlossenen Innenraum angeordneten Abströmöffnung (6) zur Ableitung des gereinigten Mediums, wobei zwischen dem Filterelement (3) und der Abströmöffnung (6) innerhalb des Stützgerüsts (4) ein Umlenkteil (50) angeordnet ist, welches separat von dem Stützgerüst (4) ausgebildet ist und wobei zwischen dem Umlenkteil (50) und der Abströmöffnung (6) ein Abscheidebauteil (9) für abzuscheidende Partikel bzw. Tröpfchen, die nach dem Durchströmen des Filterelementes (3) noch in der Fluidströmung enthalten sind, angeordnet ist, **dadurch gekennzeichnet, dass** am Umlenkteil (50), welches als ringförmige Blockadewand ausgeführt ist, wobei die in Strömungsrichtung in Richtung einer Austragsöffnung (7) für die Ableitung gesammelten Wassers betrachtet, obere Stirnkante der Blockadewand bei Anströmung bzw. Durchströmung des Filterelements (3) über seine axiale Höhe einen Überströmbereich (5) für die Strömung des Mediums von dem Filterelement (3) zur Abströmöffnung (6) bildet, wobei sich die obere Stirnkante des Umlenkteils (50) in der oberen Hälfte des Filterelements (3) befindet, bezogen auf die gesamte axiale Höhe des Filterelements (3), wobei die Oberkante der Abströmöffnung (6), bezogen auf das Umlenkteil (50), auf gleicher Höhe oder unterhalb des Überströmbereichs (5) am Umlenkteil (50) liegt, die Strömungsrichtung des gereinigten Fluids zwischen der Reinseite des Filterelements (3) und der Abströmöffnung (6), bezogen auf die reguläre Einbaulage, in der das Filterelement über seine axiale Höhe stromab Richtung Austragsöffnung (7) angeströmt bzw. durchströmt wird, in Richtung des Gewichtskraftvektors gerichtet ist.

2. Filtereinrichtung nach Anspruch 1, **dadurch gekennzeichnet, dass** das Abscheidebauteil (9) als ein Sieb ausgebildet ist.

3. Filtereinrichtung nach einem der Ansprüche 1 oder 2, **dadurch gekennzeichnet, dass** unterhalb der Abströmöffnung (6) eine Austragsöffnung (7) zum Ableiten abgeschiedener Tröpfchen angeordnet ist.

## Claims

1. Filtering device, in particular liquid filter, having an annular filter element (3) accommodated in a cylindrical housing (2) and having a supporting frame (4) disposed on the radial interior side, wherein the filter element (3) is held on the supporting frame (4), wherein a fluid to be cleaned flows through the filter element (3) radially from the outside to the inside, and wherein a coalescence medium (30) is disposed between the filter element (3) and the supporting frame (4), and having an outflow opening (6) disposed downstream of the filter element (3) in the interior space enclosed by the filter element (3) for discharging the cleaned medium, wherein a deflecting part (50) is disposed between the filter element (3) and the outflow opening (6) within the supporting frame (4), the deflecting part being formed separately from the supporting frame (4), and wherein a separating component (9) for particles or droplets to be separated, which are still contained in the fluid flow after flowing through the filter element (3), is disposed between the deflecting part (50) and the outflow opening (6), **characterized in that** on the deflecting part (50), which is designed as an annular blockade wall, wherein the upper front edge of the blockade wall, seen in flow direction in the direction of a discharge opening (7) for discharging the collected water, forms an overflow area (5) for the flow of the medium from the filter element (3) to the outflow opening (6) during an inflow or throughflow of the filter element (3) above its total axial height, wherein the upper front edge of the deflecting part (50) is located in the upper half of the filter element (3), relative to the total axial height of the filter element (3), wherein the upper edge of the outflow opening (6), with respect to the deflecting part (50), is located at the same height as or below the overflow area (5) on the deflecting part (50), the flow direction of the cleaned fluid is directed in the direction of the weight force vector between the clean side of the filter element (3) and the outflow opening (6), with respect to the regular installation position, in which the flow flows against or flows through the filter element over its axial height downstream of the discharge opening (7).

2. Filtering device according to claim 1, **characterized in that** the separator component (9) is designed as a sieve.

3. Filtering device according to one of the claims 1 or 2, **characterized in that** a discharge opening (7) for discharging separated droplets is disposed underneath the outflow opening (6).

## Revendications

1. Dispositif de filtration, notamment filtre à liquide, avec un élément filtrant (3) annulaire disposé dans un boîtier (2) cylindrique avec une structure de support (4) disposée sur la face intérieure radiale, l'élément filtrant (3) étant maintenu sur la structure de support (4), l'élément filtrant (3) étant parcouru en sens radial, de l'extérieur vers l'intérieur, par un fluide devant être purifié et un milieu de coalescence (30) étant disposé entre l'élément filtrant (3) et la structure de support (4), et avec une ouverture de sortie (6) disposée en aval de l'élément filtrant (3) dans l'espace intérieur entouré de l'élément filtrant (3) et ayant pour fonction d'évacuer le fluide purifié, une pièce de dérivation (50) étant placée entre l'élément filtrant (3) et l'ouverture de sortie (6) au sein de la structure de support (4), cette pièce étant exécutée séparément de la structure de support (4), et un composant de séparation (9) étant disposé entre la pièce de dérivation (50) et l'ouverture de sortie (6) pour les particules ou les gouttelettes à séparer qui se trouvent encore dans le flux de fluide après avoir traversé l'élément filtrant (3), **caractérisé en ce que,** sur la pièce de dérivation (50) qui est exécutée en tant que paroi de blocage annulaire, dont l'arête frontale supérieure de la paroi de blocage, considéré dans le sens du flux en direction de l'ouverture d'évacuation (7) destinée à évacuer l'eau collectée, forme, lors de l'entrée du fluide dans ou du passage du fluide à travers l'élément filtrant (3), sur sa hauteur axiale une zone de submersion (5) pour le flux du fluide de l'élément filtrant (3) vers l'ouverture de sortie (6), dont l'arête frontale supérieure de la pièce de dérivation (50) se situant dans la moitié supérieure de l'élément filtrant (3), considéré par rapport à la hauteur axiale totale de l'élément filtrant (3), dont le bord supérieur de l'ouverture de sortie (6), considéré par rapport à la pièce de dérivation (50), se trouvant à la même hauteur ou en dessous de la zone de submersion (5) de la pièce de dérivation (50), le sens du flux du fluide purifié étant dirigé en direction du vecteur de poids entre le côté pur de l'élément filtrant (3) et l'ouverture de sortie (6), considéré par rapport à la position de montage régulière dans laquelle le fluide entre dans ou parcourt l'élément filtrant, sur sa hauteur axiale, en aval en direction de l'ouverture d'évacuation (7).

2. Dispositif de filtration selon la revendication 1, **caractérisé en ce que** le composant de séparation (9) est réalisé sous forme de tamis.

3. Dispositif de filtration selon l'une des revendications 1 ou 2, **caractérisé en ce qu'**une ouverture d'évacuation (7) destinée à évacuer les gouttelettes séparées est disposée en dessous de l'ouverture de sortie (6).
